# EUROPÄISCHE PATENTANMELDUNG

(11) **EP 1 148 697 A2**
(43) Veröffentlichungstag der Anmeldung: **24.10.2001**
(21) Anmeldenummer: 01103106.9
(22) Anmeldetag: 09.02.2001
(51) Int. Cl.: H04M 3/22

(54) **Verfahren und Anordnung zur Aufzeichnung von Kommunikationsdaten**

(30) Priorität: 17.04.2000 DE 10019001
(71) Anmelder: SIEMENS AKTIENGESELLSCHAFT, 80333 München (DE)
(72) Erfinder: Lukas, Günter, 2000 Oberzögersdorf (AT)

(57) **Zusammenfassung**

Die Erfindung beschreibt eine Anordnung und ein Verfahren zur Aufzeichnung von Kommunikationsdaten zwischen zwei Kommunikationsteilnehmern (TA, TB). Auf neuartige Weise wird dabei eine Vermittlungseinrichtung (PBX) über eine CTI-Schnittstelle durch die Aufzeichnungseinrichtung (AE) gesteuert und dazu veranlaßt über eine S0-Schnittstelle digitale Daten direkt an die Aufzeichnungseinrichtung weiterzugeben, sofern eine Verbindung zwischen zwei zu überwachenden Teilnehmern aufgebaut wird. Da die Kommunikationsdaten digital weitergegeben werden, können sie vorteilhaft in einem PC direkt auf der Festplatte gespeichert werden. Vorteilhaft kann die Steuerung (STE) der Vermittlungseinrichtung zum Zwecke der Gesprächsaufzeichnung vollständig durch den PC erfolgen.

## Beschreibung

Verfahren und Anordnung zur Aufzeichnung von Kommunikationsdaten.

Die Erfindung bezieht sich auf ein Verfahren und eine Anordnung, mit welchen Kommunikationsdaten, vorzugsweise Gesprächsdaten aufgezeichnet werden können, die auf einer von einem Vermittlungssystem hergestellten Kommunikationsverbindung übertragen werden.

Am Markt für Telekommunikationsprodukte besteht ein großer Bedarf für Aufzeichnungsgeräte von Telefongesprächen, um diese protokollieren und auf verschiedenste Weise auswerten zu können. Ein Beleg dafür ist die Vielzahl von Produkten am Markt, die speziell auf dieses Segment zugeschnitten sind. Zum Protokollieren von Gesprächen gibt es beispielsweise Geräte, die von einer Vermittlungseinrichtung aus angesteuert werden und die analoge Eingänge für Teilnehmergesprächsignale haben. Derartige Geräte können beispielsweise über eine CTI-Schnittstelle und Steuersignale mit der Vermittlungseinrichtung kommunizieren und derartig von ihr aktiviert und deaktiviert werden. Die Aufzeichnung in den Geräten kann auf Magnetbändern oder anderen Aufzeichnungsmedien vorgenommen werden.

Neuere Produkte am Markt verfügen über die Möglichkeit, analog eingehende Gesprächssignale zu digitalisieren und auf der Magnetplatte eines Personalcomputers abzuspeichern. Solche Geräte sind auch mit CTI-Schnittstelle verfügbar, über welche Steuerbefehle mit einer zugehörigen Vermittlungseinrichtung ausgetauscht werden können. Ein Beispiel für ein solches Produkt, ist die PC-Steckarte MTP8PCI, des Herstellers Music Telecom aus der Passport-PCI Serie dieses Herstellers.

Allgemein weisen die Aufzeichnungseinrichtungen des Standes der Technik den Nachteil auf, daß ihnen Kommunikationssignale direkt und auf analoger Basis zugeführt werden müssen, und daß die Steuerung einer bekannten Aufzeichnungsvorrichtung durch die Vermittlungseinrichtung veranlaßt werden muß.

Die der Erfindung zugrunde liegende Aufgabe besteht darin, ein Verfahren und eine Anordnung zur Aufzeichnung von Kommunikationsdaten anzugeben, welche die bekannten Nachteile des Standes der Technik vermeiden.

Diese Aufgabe wird für das Verfahren gemäß den Merkmalen des Patentanspruches 1 und für die Anordnung gemäß den Merkmalen des Patenanspruches 6 gelöst. Weiterbildungen der Erfindung ergeben sich aus den abhängigen Ansprüchen.

Ein besonderer Vorteil des erfindungsgemäßen Verfahrens besteht darin, daß die Kommunikationsdaten in digitaler Form über eine digitale Schnittstelle an die Aufzeichnungseinrichtung weitergegeben werden. Auf diese Weise entfällt der Leitungsaufwand für die Bereitstellung von analogen Verbindungen zur Aufzeichnungseinrichtung ebenso, wie der damit fällige Schritt zur analog-digital-Wandlung, um eine digitale Aufzeichnung auf beispielsweise einer Festplatte eines Personalcomputers vornehmen zu können.

Vorteilhaft werden bei einer Weiterbildung des beschriebenen Verfahrens nicht alle Kommunikationsdaten aufgezeichnet, die bei allen zustande kommenden Verbindungen über die Vermittlungseinrichtung anfallen, sondern lediglich solche Kommunikationsdaten von Kommunikationsverbindungen, die vorab festgelegt wurden. Auf diese Weise wird sichergestellt, daß der Speicherplatz in der Aufzeichnungseinrichtung ökonomisch genutzt werden kann und der digitale Datenstrom über die digitale Schnittstelle zwischen der Vermittlungseinrichtung und der Aufzeichnungseinrichtung begrenzt bleibt.

Besonders vorteilhaft wird bei einer Weiterbildung des beschriebenen Verfahrens die Datenaufzeichnung durch die Aufzeichnungseinrichtung gesteuert, indem beispielsweise die Aufzeichnungseinrichtung zustande kommende Kommunikationsverbindungen über die Vermittlungseinrichtung überwacht und für den Fall, daß eine zu überwachende Kommunikationsverbindung aufgebaut wird, die Weiterleitung der betreffenden Kommunikationsdaten an sich selbst durch Steuerung der Vermittlungseinrichtung veranlaßt.

Besonders vorteilhaft steuert die Aufzeichnungseinrichtung bei einer Weiterbildung des beschriebenen Verfahrens die Vermittlungseinrichtung über eine CTI-Verbindungsstrecke, weil für CTI-Schnittstellen standardisierte Übertragungsprotokolle verfügbar sind und der Implementierungsaufwand für den Aufbau einer Steuerung gering bleibt.

Besonders vorteilhaft werden bei einer Weiterbildung des beschriebenen Verfahrens Gesprächsdaten in digitalisierter Form aufgezeichnet, weil Kommunikationsverbindungen häufig in Form von Gesprächsverbindungen auftreten, also für eine Aufzeichnung derartiger Verbindungen ein hoher Bedarf besteht und weil sich digitalisierte Sprache durch Standardverfahren leicht komprimieren läßt, um den Speicherplatz auf einer Magnetplatte noch optimaler nutzen zu können.

Besonders vorteilhaft ist eine Anordnung aus zwei Kommunikationsteilnehmern, einer Vermittlungseinrichtung, einer Aufzeichnungseinrichtung und einer Steuerung, bei der digitale Daten einer Kommunikationsverbindung zwischen den zwei Teilnehmern über eine digitale Schnittstelle, gesteuert durch die vorhandene Steuerung, an die Aufzeichnungsvorrichtung zur digitalen Aufzeichnung weitergegeben werden, weil eine derartige Anordnung mit technisch und apparativ geringem Aufwand eine neuartige Einrichtung zur Aufzeichnung von Kommunikationsdaten bereitstellt.

Besonders vorteilhaft weist eine Weiterbildung der beschriebenen Anordnung eine SO-Schnittstelle auf, weil es sich dabei um eine standardisierte Schnittstelle handelt, über die digitale Kommunikationsdaten übertragen werden können und somit der Aufwand für die Anbindung einer Aufzeichnungseinrichtung für digitale Kommunikationsdaten minimiert wird, indem auf standardisierte Produkte zurückgegriffen werden kann.

Besonders vorteilhaft weist eine Weiterbildung der beschriebenen Anordnung zwischen der Vermittlungseinrichtung und der Aufzeichnungseinrichtung eine CTI-Verbindung auf, weil sich über die CTI-Verbindung die Vermittlungseinrichtung durch Aufzeichnungseinrichtung steuern läßt, über die CTI-Verbindung standardisierte Protokolle zwischen der Aufzeichnungseinrichtung und der Vermittlungseinrichtung abgehandelt werden können und damit der Prozessor der Vermittlungseinrichtung durch die Aufzeichnung der Kommunikationsdaten nicht belastet wird. Auf diese Weise kann er seine übrigen Aufgaben effizienter erledigen.

Vorteilhaft steuert die Aufzeichnungseinrichtung mittels einer Steuerung, die in der Aufzeichnungseinrichtung angeordnet ist, die Vermittlungseinrichtung zum Zwecke der Kommunikationsdatenaufzeichnung, indem sie dort für bestimmte zu protokollierende Verbindungen die Weitergabe von Kommunikationsdaten veranlaßt. Weil bei einer derartigen Anordnung die Überwachung der Kommunikationsverbindungen und die Steuerung durch die Aufzeichnungseinrichtung vorgenommen wird, werden Verarbeitungseinrichtungen der Vermittlungseinrichtung optimal entlastet.

Besonders vorteilhaft wird bei einer Weiterbildung der beschriebenen Anordnung die Aufzeichnungseinrichtung als PC ausgeführt, weil PCs am Markt kostengünstig verfügbar sind, und für die Aufzeichnung digitaler Kommunikationsdaten ideal geeignet sind, sie ebenfalls auf digitaler Verarbeitung basieren und ein magnetisches Aufzeichnungsmedium in Form einer Festplatte aufweisen, das für die Kommunikationsdatenaufzeichnung benutzt werden kann.

Besonders vorteilhaft weist bei einer Weiterbildung der beschriebenen Anordnung der PC eine Netzwerkschnittstelle auf, über die digitale Kommunikationsdaten in das Netzwerk eingespeist, bzw. aus dem Netzwerk ausgelesen werden können, weil auf diese Weise eine verteilte Aufzeichnungs- und Wiedergabeanordnung zur Verfügung gestellt wird, die eine hohe Redundanz und eine damit verbundene hohe Ausfallsicherheit aufweist, ohne einen großen Zusatzaufwand bei der Implementierung zu benötigen.

Im Folgenden werden Ausführungsbeispiele der Erfindung anhand von Figuren weiter erläutert.
- Figur 1: zeigt eine Aufzeichnungseinrichtung nach dem Stand der Technik.
- Figur 2: zeigt ein Beispiel einer erfindungsgemäßen Aufzeich- nungsanordnung,
- Figur 3: zeigt ein Beispiel eines Kommunikationsschemas bei der Anwendung eines erfindungsgemäßen Verfahrens.

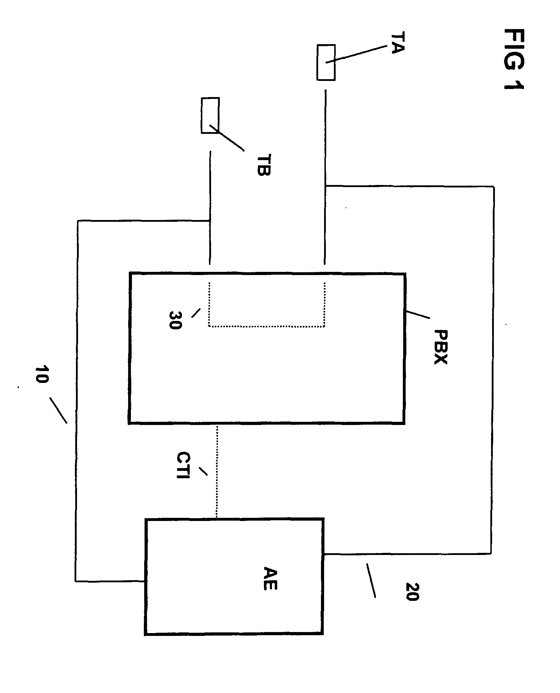

Wie Figur 1 zeigt, besteht eine Aufzeichnungsanordnung nach dem Stand der Technik aus zwei Teilnehmern und ihnen zugeordneten Teilnehmerendgeräten TA und TB, sowie einer Vermittlungseinrichtung PBX, die eine Kommunikationsverbindung 30 zwischen den Kommunikationsteilnehmern TA und TB bereitstellt. Desweiteren ist in dieser Anordnung eine Aufzeichnungseinrichtung AE vorhanden, die mittels analoger Anschlußleitungen 10 und 20 mit den Teilnehmern, bzw. deren Endgeräten TB und TA verbindbar ist. Über eine Steuerleitung CTI kann die Aufzeichnungseinrichtung AE von der Vermittlungseinrichtung PBX angesteuert werden, um eine analoge Aufzeichnung der analogen Kommunikationssignale zwischen TA und TB vorzunehmen.

Eine derartige Anordnung hat den Nachteil, daß nur Kommunikationsdaten aufgezeichnet werden können, wenn zwischen den Teilnehmerendgeräten und der Aufzeichnungseinrichtung eine analoge Verbindung besteht. Dies bedeutet, daß nur eine beschränkte Anzahl von Teilnehmern überwachbar ist und zur Kommunikationsdatenaufzeichnung ein hoher Hardwareaufwand betrieben werden muß.

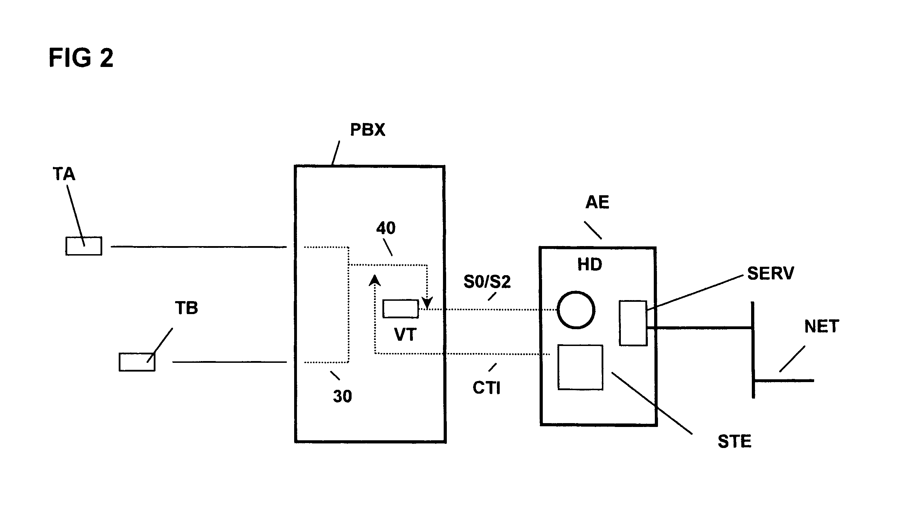

Figur 2 zeigt ein Realisierungsbeispiel einer Aufzeichnungsund Wiedergabeanordnung. Von einer Vielzahl möglicher Teilnehmer und deren Endgeräte sind wiederum Teilnehmer TA, bzw. dessen Endgerät, und Teilnehmer TB, bzw. dessen Endgerät dargestellt. Weitere wesentliche Bestandteile sind die Vermittlungseinrichtung PBX und die Aufzeichnungseinrichtung AE.

Zwischen den Teilnehmern TA und TB wird eine Kommunikationsverbindung über die Vermittlungseinrichtung PBX aufgebaut. Über diese Kommunikationsverbindung 30 werden digitale Kommunikationsdaten übertragen. In diesem Zusammenhang ist zu erwähnen, daß es sich bei der Kommunikationsverbindung 30 nicht lediglich um eine Kommunikationsverbindung zwischen Festnetzendgeräten handeln muß. Vielmehr können beliebige Kombinationen von Festnetz- und Mobilendgeräten miteinander verbunden werden, sofern sie miteinander digitale Kommunikationsdaten austauschen, die über die Vermittlungseinrichtung PBX weitergereicht werden.

Zwischen der Vermittlungseinrichtung PBX und der Aufzeichnungseinrichtung AE ist eine CTI-Verbindung CTI gezeigt, welche dazu dient, daß zwischen der Vermittlungseinrichtung und der Aufzeichnungseinrichtung Steuerbefehle ausgetauscht werden können. Diese Steuerbefehle dienen dazu, für den Aufzeichnungsfall von Kommunikationsdaten die Aufzeichnung zu starten und zu beenden, bzw. festzustellen, ob eine Kommunikationsverbindung 30 zustande kommt, von der Kommunikationsdaten aufgezeichnet werden sollen. Bei der CTI-Verbindung handelt es sich um eine geläufige standardisierte Verbindung, über die herstellerspezifische Protokolle abgehandelt werden können. Ein Beispiel eines solchen herstellerspezifischen Protokolles ist CSTA (Computer Supported Telefonie Integration). Um einen Aufzeichnungsvorgang einleiten zu können, ist eine Steuerung erforderlich, welche über die CTI-Schnittstelle einen Befehl zur Einleitung des Aufzeichnungsvorgangs, bzw. eines Wiedergabevorgangs abgibt. In diesem Fall ist die Steuerung STE in der Aufzeichnungseinrichtung angeordnet, weil eine derartige Anordnung den Vorteil hat, daß die Verarbeitungseinrichtung in der Vermittlungseinrichtung PBX von Steuer- und Analysevorgängen entlastet wird. Es ist aber auch denkbar, daß die Steuerung als Prozeß einer zentralen Verarbeitungseinrichtung in der Vermittlungseinrichtung PBX abläuft. Zwischen der Vermittlungseinrichtung PBX und der Aufzeichnungseinrichtung befindet sich eine weitere Schnittstelle S0/S2, über welche digitale Kommunikationsdaten beispielsweise auf eine Magnetplatte HD der Aufzeichnungseinrichtung übertragen und gespeichert werden können. Ebenfalls ist hier beispielhaft ein Netzwerkzugang SERV angedeutet, mit dem die Aufzeichnungseinrichtung AE in Verbindung mit einem Kommunkations- oder Datennetz NET aufnehmen kann.

Beispielsweise können so Daten von Gesprächen aufgezeichnet werden, die über das Datennetz NET übertragen stattfinden, oder aufgezeichnete Kommunikationsdaten der Festplatte HD in das Netz eingespeist werden. Ggf. besteht auch die Möglichkeit, daß die Aufzeichnungseinrichtung direkt die über die Schnittstelle S0/S2 eintreffenden digitalen Kommunikationsdaten in das Daten- oder Kommunikationsnetz NET einspeist, wo sie von anderen Einrichtungen des Netzes NET weiterverarbeitet, bzw. gespeichert werden.

Für den Fall, daß eine beschränkte Anzahl von Kommunikationsverbindungen 30 überwacht werden soll, ist ggf. in der Aufzeichnungseinrichtung eine Liste vorhanden, anhand derer teilnehmerspezifische Informationen für Überwachungszwecke zugänglich gemacht werden, indem sie entsprechende zu überwachende Kommunikationsverbindungen 30 kennzeichnen. Ggf. können diese Informationen auch endgeräteabhängig definiert werden.

Falls nun eine derartige Verbindung zwischen TA und TB aufgebaut wird, deren Daten aufgezeichnet werden sollen, so wird beispielsweise dieser Vorgang von der Steuerung STE in der Aufzeichnungseinrichtung erkannt, weil über die Schnittstelle S0/S2 Daten eintreffen. In diesem Fall wird beispielsweise von der Steuerungseinrichtung STE über die CTI-Schnittstelle ein Steuerbefehl an die Vermittlungseinrichtung PBX abgegeben, der bewirkt, daß die Verbindung 30 auf eine Verbindung 40 zwischen einem virtuellen Terminal VT und der Aufzeichnungseinrichtung AE gespiegelt wird. Der Vorgang der Datenduplizierung ist dabei auf der Kommunikationsverbindung 30 nicht nachvollziehbar. Die Kommunikationsdaten auf der Kommunikationsverbindung 30 gelangen über den Weg 40 und die Schnittstelle S0/S2 in die Aufzeichnungseinrichtung, wo sie auf der Festplatte HD aufgezeichnet werden. Bevorzugt ist die Aufzeichnungseinrichtung AE als PC ausgeführt, der eine Festplatte HD aufweist. Es können aber auch andere periphere Einrichtungen des Personalcomputers für die Kommunikationsdatenaufzeichnung herangezogen werden. Beispielsweise können dies einmal beschreibbare oder wieder beschreibbare optische Platten sein. Das Kommunikations- oder Datennetz kann beispielsweise ein lokales Netzwerk sein oder auch das World Wide Web.

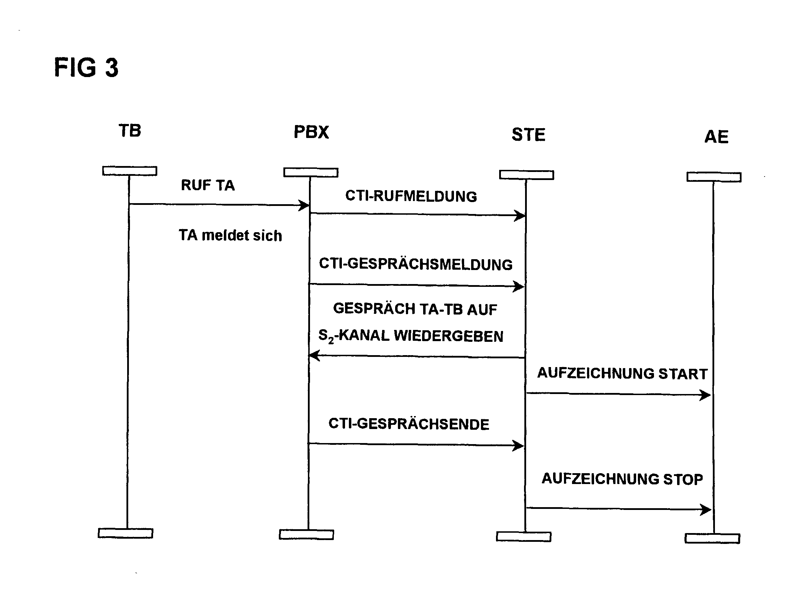

In Figur 3 ist ein Kommunikationsschema dargestellt, das den Aufzeichnungsvorgang am Beispiel eines Aufzeichnungsverfahrens und der damit ausgetauschten Meldungen veranschaulicht.

Zunächst wird in der Vermittlungseinrichtung PBX ein ankommender Ruf des Teilnehmers TB detektiert. Die Vermittlungseinrichtung PBX gibt eine CTI-Rufmeldung an die Steuerung STE ab und nachdem sich Teilnehmer A meldet, veranlaßt die Vermittlungseinrichtung über die CTI-Schnittstelle eine CTI-Gesprächsmeldung an die Steuerung STE. Die Steuerung veranlaßt als Reaktion auf die Gesprächsmeldung das Gespräch zwischen TA und TB auf dem S₂-Kanal wiederzugeben. Im Anschluß befiehlt die Steuerung weiterhin der Aufzeichnungseinrichtung mit der Aufzeichnung der Gesprächsdaten bzw. Kommunikationsdaten zu beginnen. Nach Beendigung des Gesprächs zwischen TA und TB wird von der Vermittlungseinrichtung PBX eine Meldung CTI-Gesprächsende an die Steuerung abgegeben, die daraufhin die Aufzeichnungseinrichtung veranlaßt, den Aufzeichnungsvorgang zu beenden.

Eine analoge Vorgehensweise ist bei der Wiedergabe der aufgezeichneten Kommunikationsdaten über ein Endgerät denkbar. Ggf. kann vor dem Kommando das Gespräch von TA zu TB auf dem S₂-Kanal wiederzugeben von der Steuerungseinrichtung STE überprüft werden, ob es sich bei einer Verbindung zwischen TA und TB um eine solche Verbindung handelt, deren Kommunikationsdaten aufgezeichnet werden sollen. Diese Überprüfung kann anhand endgerätespezifischer oder teilnehmerspezifischer Daten erfolgen, die zuvor für zu überwachende Verbindungen festgelegt wurden und für den Zugriff durch die Steuerung STE bereitgehalten werden.

Besonders vorteilhaft ist bei einer derartigen Anordnung und bei einem derartigen Verfahren, daß die Steuerung komplett durch den PC durchgeführt wird. Es werden ebenfalls keine zusätzlichen Aufzeichnungsgeräte, wie Tonband oder Locker, etc. benötigt. Ebenfalls kann vorteilhaft auf dem PC ein WorldWide-Web-Server implementiert sein, so daß über ein LAN über Intranet oder Internet von anderen PCs auf die aufgezeichneten Daten zugegriffen werden kann. Durch die Verwendung eines PC wird die Störsicherheit sowie die Performance im Vergleich zum Stand der Technik erheblich verbessert.

## Patentansprüche

1. Verfahren zur Aufzeichnung und/oder Wiedergabe von Kommunikationsdaten,
a) bei dem ein A-Teilnehmer (TA) und ein B-Teilnehmer (TB) über eine digitale Vermittlungseinrichtung (PBX) miteinander durch eine Kommunikationsverbindung (30) verbunden werden,
b) bei dem digitale Kommunikationsdaten der Kommunikationsverbindung (30) über eine digitale Schnittstelle (CTI) zwischen einer digitalen Aufzeichnungseinrichtung (AE) und der digitalen Vermittlungseinrichtung ausgetauscht werden.

2. Verfahren nach Anspruch 1,
bei dem eine zur Aufzeichnung vorgesehene Kommunikationsverbindung (30) vorab festgelegt wird.

3. Verfahren nach einem der vorangehenden Ansprüche,
bei dem die digitale Aufzeichnungseinrichtung (AE) die Vermittlungseinrichtung (PBX) steuert.

4. Verfahren nach Anspruch 3,
bei dem die digitale Vermittlungseinrichtung (PBX) über eine separate CTI-Verbindung (CTI) mit der digitalen Aufzeichnungseinrichtung (AE) Steuerinformationen austauscht.

5. Verfahren nach einem der vorangehenden Ansprüche,
bei dem als digitale Kommunikationsdaten digitalisierte Sprache aufgezeichnet und/oder wiedergegeben werden.

6. Anordnung zur Aufzeichnung und/oder Wiedergabe von Kommunikationsdaten mit folgenden Merkmalen:
a) sie weist mindestens zwei Teilnehmer (TA, TB) auf, die über eine Kommunikationsverbindung (30) digital kommunizieren können;
b) sie weist eine digitale Vermittlungseinrichtung (PBX) zur Bereitstellung der digitalen Kommunikationsverbindung (30) auf;
c) sie weist eine digitale Aufzeichnungseinrichtung (AE) auf, die mittels einer digitalen Datenverbindung (S0/S2) mit der Vermittlungseinrichtung (PBX) verbunden ist;
d) sie weist erste Mittel (STE) auf, zur Steuerung der Vermittlungseinrichtung (PBX) und Veranlassung des Austauschs von digitalen Kommunikationsdaten zwischen der digitalen Aufzeichnungseinrichtung (AE) und der digitalen Vermittlungseinrichtung (PBX).

7. Anordnung nach Anspruch 6,
bei der die digitale Datenverbindung (S0/S2) eine S₀-Schnittstelle aufweist.

8. Anordnung nach einem der Ansprüche 6 oder 7,
die zwischen der digitalen Aufzeichnungseinrichtung (AE) und der digitalen Vermittlungseinrichtung (PBX) eine CTI-Verbindung (CTI) aufweist.

9. Anordnung nach Anspruch 8,
bei der die ersten Mittel (STE) in der digitalen Aufzeichnungseinrichtung (AE) angeordnet sind und diese die Vermittlungseinrichtung (PBX) über die CTI-Verbindung (CTI) steuern.

10. Anordnung nach einem der Ansprüche 6 bis 9,
bei der die digitale Aufzeichnungseinrichtung (AE) als PC ausgeführt ist.

11. Anordnung nach Anspruch 10,
bei welcher der PC eine Verbindung zu einem Datennetz (NET) aufweist, und die Aufzeichnung über das Datennetz (NET) erfolgt.
